# EUROPEAN PATENT SPECIFICATION

(11) **EP 4 682 415 B1**
(45) Date of publication and mention of the grant of the patent: **19.08.2026**
(21) Application number: 25710293.9
(22) Date of filing: 22.01.2025
(51) Int. Cl.: G05D 16/20, F16K 31/06, F16K 3/314

(54) **THREE-STAGE PILOT INVERSELY-PROPORTIONAL PRESSURE-REDUCING SOLENOID VALVE**
DREISTUFIGES ELEKTROMAGNETVENTIL MIT INVERSER PROPORTIONALER VORSTEUERUNG ZUR DRUCKREDUZIERUNG
ÉLECTROVANNE DE RÉDUCTION DE PRESSION INVERSEMENT PROPORTIONNELLE PILOTE À TROIS ÉTAGES

(30) Priority: 31.05.2024 CN 202410693464
(43) Date of publication of application: 21.01.2026
(73) Proprietor: Hangzhou Ruiheng Electromagnetic Technology Co., Ltd, Hangzhou City, Zhejiang Province 310000 (CN)
(72) Inventor: WANG, Qilin, Hangzhou City, Zhejiang Province 310000 (CN); CHEN, Pu, Hangzhou City, Zhejiang Province 310000 (CN); JU, Jiawei, Hangzhou City, Zhejiang Province 310000 (CN)
(74) Representative: Chung, Hoi Kan
(86) International application number: PCT/CN2025/073921
(87) International publication number: WO 2025/246409

(56) References cited:
- CN-A- 103 727 083
- CN-A- 107 504 213
- CN-A- 118 257 898
- JP-A- 2000 192 908
- JP-A- H06 159 546
- US-A1- 2009 090 882
- US-B1- 10 775 812

## Description

### CROSS-REFERENCE TO RELATED APPLICATIONS

This application is a continuation of PCT/CN2025/073921, filed January 22, 2025 and claims priority of Chinese Patent Application No. 202410693464.9, filed on May 31, 2024.

### TECHNICAL FIELD

The disclosure relates to the technical field of an electromagnetic valve, in particular to a three-stage pilot inverse proportional pressure-reducing solenoid valve.

### BACKGROUND

Three-stage pilot inverse proportional pressure-reducing solenoid valve (VFS) is usually used in high-pressure and large-flow precise fluid pressure control system, which includes an electromagnetic control unit, which can adjust the internal mechanical structure according to the change of electrical signals, thus achieving accurate pressure control. The first stage is usually a small pilot valve, which controls the second stage, and the second stage controls the third stage, and finally reaches the main valve to realize accurate pressure adjustment. This multi-stage pilot design can improve the response speed and accuracy of the valve, especially for those systems that need very fine pressure adjustment, such as automatic control system or precision hydraulic system.

In the Osling type three-stage pilot inverse proportional pressure-reducing solenoid valve, the single electromagnetic force is often not enough to directly control the main valve because of the high working pressure and large pressure acting surface of the main valve. Therefore, the design adopts a three-stage pilot amplifier structure to enhance the control strength and accuracy.

The first-stage pilot valve adopts slide valve structure, while the second-stage pilot valve and the third-stage pilot valve adopt plate relief valve structure, which are used to control or limit the fluid pressure and make the internal pressure reach the set value, and are suitable for occasions requiring accurate control.

In the plate relief valve, the plate or valve core moves under the action of fluid pressure to control the flow or pressure of fluid. This movement may cause the vibration of the valve structure, and the dynamic changes of fluid (such as velocity and pressure fluctuation) will further affect these vibrations, forming a complex coupled vibration system, which will lead to the inherent coupled vibration problem of the plate relief valve structure. Once the coupled vibration occurs, the adjustment effect of the solenoid valve will be significantly reduced. In suspension system, the valve is usually required to respond to the dynamic load change at high speed, which means that the valve needs to work stably at high frequency, and the mechanical structure (such as plate relief valve) itself cannot effectively suppress or isolate the high-frequency vibration caused by the dynamic change of fluid. In addition, in the plate relief valve, the space and design options available for increasing damping or isolating vibration may be very limited, which limits the possibility of effective vibration control in high-frequency applications.

In the Osling type three-stage pilot inverse proportional pressure-reducing solenoid valve, the electromagnetic drive part adopts the structure of magnetic isolation ring welding, which can be used when the pressure of suspension system is above 30MPa. However, welding and airtight detection increase the product cost, and there is the possibility that welding defects may lead to internal leakage of the product.

US10775812B discloses a valve comprising a pilot seat member comprising: a channel that is fluidly coupled to a first port of the valve, a pilot seat, and one or more cross-holes fluidly coupled to a second port of the valve; a pilot check member configured to be subjected to a fluid force of fluid in the channel of the pilot seat member acting on the pilot check member in a proximal direction; a solenoid actuator sleeve comprising a chamber; a first setting spring disposed in the chamber and configured to bias the solenoid actuator sleeve in a distal direction; and a second setting spring configured to bias the pilot check member in the distal direction, such that the first setting spring and the second setting spring cooperate to apply a biasing force in the distal direction on the pilot check member toward the pilot seat against the fluid force.

### SUMMARY

The purpose of the disclosure is to solve the defects that the plate relief valve structure in the existing high-pressure and large-flow proportional solenoid valve for suspension system is unstable due to vibration, and the electromagnetic drive part is complicated in structure and has the risk of product failure due to internal leakage, and to provide a three-stage pilot inverse proportional pressure-reducing solenoid valve.

In order to solve the shortcomings of the prior art, the disclosure provides the following technical solutions.

A three-stage pilot inverse proportional pressure-reducing solenoid valve is provided and includes a yoke and a stop iron assembly, the special feature is that:
the yoke is annular, two ends of the yoke are respectively provided with a valve body assembly and a coil assembly, and a first cavity is formed among the valve body assembly, the yoke and the coil assembly; the valve body assembly includes an annular valve body, a primary valve core assembly and a main spring, where the valve body is radially provided with multiple first radial through holes being evenly distributed on a circumference;
the stop iron assembly includes a stop iron and a second spring; the stop iron is located in the first cavity, a flow passage gap is arranged between an outer sidewall of one end, close to the valve body, of the stop iron and an inner wall of the first cavity, a first axial blind hole with an opening facing the valve body is arranged on the stop iron in an axial direction, and a second-stage valve core, a third-stage valve core and an armature are sequentially arranged in the first axial blind hole from outside to inside along an axial direction;
the second-stage valve core includes an annular guide cylinder, a first radial outer convex ring arranged on an outer sidewall of the guide cylinder, and a radial inner convex ring arranged on an inner sidewall of one end, close to the valve body assembly, of the guide cylinder, and an inner hole of the radial inner convex ring forms a first damping hole; the third-stage valve core includes an annular ejector rod, a second radial outer convex ring arranged on an outer sidewall of the ejector rod, and multiple second radial through holes arranged on a sidewall of one end, close to the second-stage valve core, of the ejector rod, and one end of the ejector rod extends into the guide cylinder and is limited by the radial inner convex ring of the guide cylinder, an outer diameter of the ejector rod is matched with an inner diameter of the guide cylinder and the ejector rod is capable of relatively sliding to block multiple second radial through holes, and an other end of the ejector rod is sequentially sleeved with a bearing and a pole shoe from inside to outside in a radial direction, and the other end is used for abutting against the armature; multiple first axial through holes being evenly distributed on a circumference are arranged on the second radial outer convex ring along an axial direction; an inner wall of the first axial blind hole is provided with a first annular groove and a second annular groove being respectively adapted to peripheries of the first radial outer convex ring and the second radial outer convex ring; a sidewall of the second annular groove is provided with multiple third radial through holes being evenly distributed on a circumference along a radial direction;
an inner wall of the valve body, the primary valve core assembly and the second-stage valve core forms a first pilot cavity, and the main spring is located in the first pilot cavity; voids defined between an inner wall of the guide cylinder and an inner wall of the ejector rod, and between the armature, an outer wall of the ejector rod, the pole shoe, the bearing and an inner wall of the first axial blind hole together forms a second pilot cavity; the second-stage valve core, the third-stage valve core and an inner wall of the first axial blind hole form an annular third pilot cavity, and the second spring is located in the third pilot cavity; the first pilot cavity communicates with an outside through a flow passage on the primary valve core assembly, the first pilot cavity communicates with the second pilot cavity through the first damping hole, and the second pilot cavity communicates with the third pilot cavity through the second radial through holes; the third pilot cavity sequentially communicates with the outside through multiple first axial through holes, the second annular groove, multiple third radial through holes and the flow passage gap, or sequentially through a gap between the second radial outer convex ring and an inner wall of the first axial blind hole, the second annular groove and multiple third radial through holes, and the flow passage gap; a minimum value of flow passage radial cross-sectional area of the primary valve core assembly is smaller than radial cross-sectional area of the first damping hole, and the radial cross-sectional area of the first damping hole is smaller than sum of radial cross-sectional areas of multiple third radial through holes.

Further, the primary valve core assembly includes a valve seat, a primary valve core and a leaf spring being sequentially arranged in the valve body from outside to inside along an axial direction; the main spring is arranged between the leaf spring and the primary valve core; the valve seat and the primary valve core are respectively provided with a valve seat through hole and a second damping hole being sequentially communicated; radial cross-sectional area of the valve seat through hole is larger than radial cross-sectional area of the second damping hole, and the radial cross-sectional area of the second damping hole is smaller than the radial cross-sectional area of the first damping hole; the first pilot cavity is sequentially communicated with the outside through the second damping hole and the valve seat through hole.

Further, the leaf spring and the main spring are integrated.

Further, one end, close to the second-stage valve core, of the second radial outer convex ring is provided with an axial concave ring, and multiple first axial through holes are arranged on a bottom surface of the axial concave ring.

Further, one end of an inner wall, close to the valve body assembly, of the yoke is sequentially provided with at least one of annular grooves and an annular boss along an axial direction; a position of one of the annular grooves corresponds to a position of the second annular groove, an inner periphery of the annular boss is provide with at least one of notches, and all the annular grooves and all the notches form the flow passage gap.

Further, multiple annular grooves are provided, and diameters of multiple annular grooves gradually increase along an axial direction and close to the valve body assembly.

Further, the solenoid valve further includes a clamp spring, the coil assembly includes a coil plastic package plug arranged at an other end of the yoke and a coil body arranged between an inner sidewall of the yoke and an outer sidewall of the stop iron; the clamp spring is arranged between the coil body and the inner sidewall of the yoke.

Further, an inner wall of the yoke is provided with a third annular groove, and an annular cavity is formed between an inner sidewall of the third annular groove and the outer sidewall of the stop iron; the coil body is arranged in the annular cavity, and the coil body includes a coil skeleton, an enameled wire, a coil plastic package and a magnetic circuit board; the clamp spring is arranged between the coil plastic package and an inner wall of the third annular groove.

Further, a composite coating is arranged on the inner wall of the first axial blind hole at a position corresponding to the armature.

Further, the armature is axially provided with at least one second axial through hole, or a gap is arranged between the armature and the inner wall of the first axial blind hole.

Compared with the prior art, the disclosure has the beneficial effects that.

Firstly, the three-stage pilot inverse proportional pressure-reducing solenoid valve is provided and adopts a slide valve type pilot valve structure, and integrates the second radial outer convex ring and the ejector rod into a part (three-stage valve core). When the three-stage valve core moves, its two ends are supported by the bearing in the stop iron and the inner hole of the guide cylinder to form a stable double support structure. However, the three-stage valve core in the plate-type relief valve structure used in the Osling type three-stage pilot inverse proportional pressure-reducing solenoid valve lacks the axial guide limit structure. During the movement, under the impact of liquid flow, the three-stage valve core will be eccentric and the valve body will rub, which will lead to problems in product stability. The disclosure eliminates the contact friction problem caused by eccentricity between the three-stage valve core and the valve body.

Secondly, the three-stage pilot inverse proportional pressure-reducing solenoid valve provided in the disclosure adopts a symmetrical main valve flow passage design and a double-support two-stage pilot valve structure, and has good pressure stability.

Thirdly, the number of parts of the three-stage pilot inverse proportional pressure-reducing solenoid valve provided in the disclosure is reduced by four (one bearing, one magnetic isolation ring, one ejector rod and one leaf spring are reduced) compared with the Osling type three-stage pilot inverse proportional pressure-reducing solenoid valve. Due to the adoption of the integrated stop iron proportional electromagnet structure based on particle flow, the parts are processed and formed at one time without secondary processing, and the production process of the disclosure reduces two laser welding processes and one post-welding processing process, so the production efficiency is higher, the cost is lower and the quality is more stable.

### BRIEF DESCRIPTION OF THE DRAWINGS

FIG. 1 is a front view of an embodiment of the disclosure;
FIG. 2 is a bottom view of an embodiment of the disclosure;
FIG. 3 is a sectional view taken along the line A-A of FIG. 1;
FIG. 4 is a schematic sectional diagram of the valve body assembly in the embodiment of the disclosure;
FIG. 5 is a schematic structural diagram of the stop iron assembly in the embodiment of the disclosure;
FIG. 6 is a schematic structural diagram of a three-stage valve core in an embodiment of the disclosure;
FIG. 7 is a schematic sectional diagram of the armature in the embodiment of the disclosure;
FIG. 8 is a schematic sectional diagram of the stop iron in the embodiment of the disclosure;
FIG. 9 is a schematic sectional diagram of the yoke in the embodiment of the disclosure;
FIG. 10 is a schematic sectional diagram of the coil body in the embodiment of the disclosure;
FIG. 11 is a schematic sectional diagram of a coil skeleton in an embodiment of the disclosure;
FIG. 12 is a schematic structural diagram of an enameled wire in an embodiment of the disclosure;
FIG. 13 is a schematic structural diagram of a magnetic circuit board in an embodiment of the disclosure;
FIG. 14 is a schematic structural diagram of coil plastic package in the embodiment of the disclosure;
FIG. 15 is the first schematic diagram of the working principles of the first pilot cavity, the second pilot cavity and the third pilot cavity in the embodiment of the disclosure; and
FIG. 16 is the second schematic diagram of the working principles of the first pilot cavity, the second pilot cavity and the third pilot cavity in the embodiment of the disclosure.

List of reference characters: 1 yoke; 11 third annular groove; 12 annular groove; 13 annular boss; 14 notch; 2 valve body assembly; 21 valve body; 211 first radial through hole; 22 main spring; 23 valve seat; 231 valve seat through hole; 24 primary valve core; 241 second damping hole; 25 leaf spring; 3 stop iron assembly; 31 stop iron; 311 first annular groove; 312 second annular groove; 3121 third radial through hole; 32 secondary valve core; 321 guide cylinder; 322 first radial outer convex ring; 323 radial inner convex ring; 324 first damping hole; 33 three -stage valve core; 331 ejector rod; 332 second radial outer convex ring; 333 second radial through hole; 334 axial concave ring; 335 first axial through hole; 34 armature; 341 second axial through hole; 35 second spring; 36 pole shoe; 37 bearing; 38 composite coating; 4 coil assembly; 41 coil plastic package plug; 42 coil body; 421 coil skeleton; 422 enameled wire; 423 coil plastic package; 424 magnetic circuit board; 5 clamp spring; 10 first pilot cavity; 20 second pilot cavity; and 30 third pilot cavity.

### DETAILED DESCRIPTION OF THE EMBODIMENTS

The disclosure will be further described with reference to the attached drawings and exemplary embodiments.

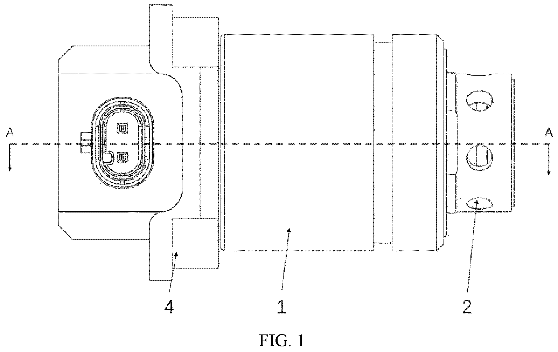

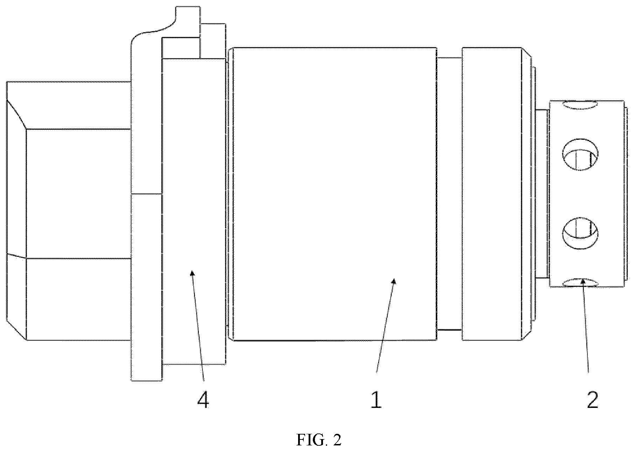

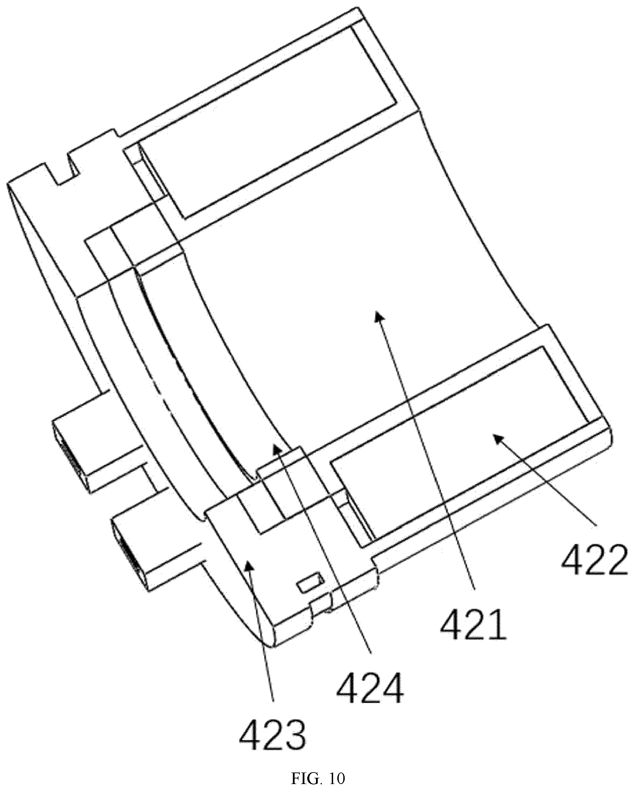

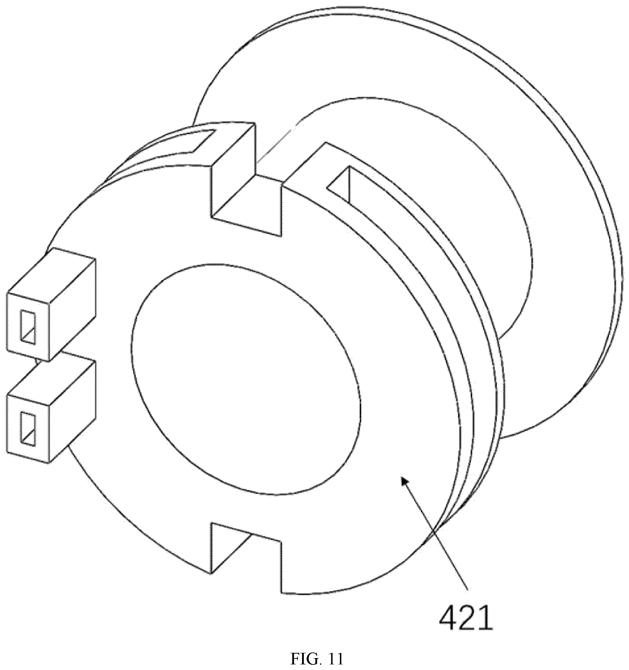

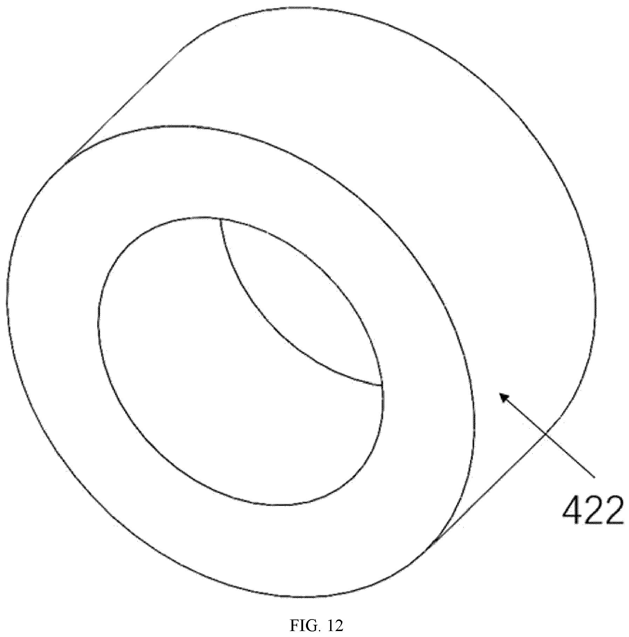

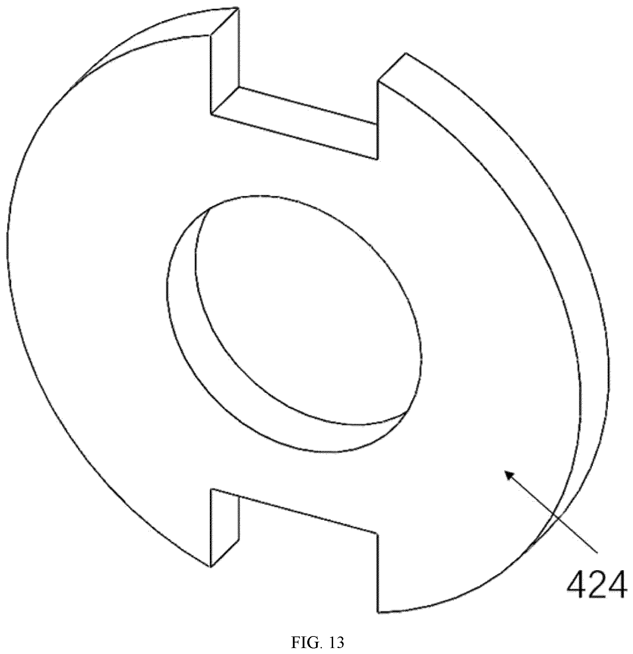

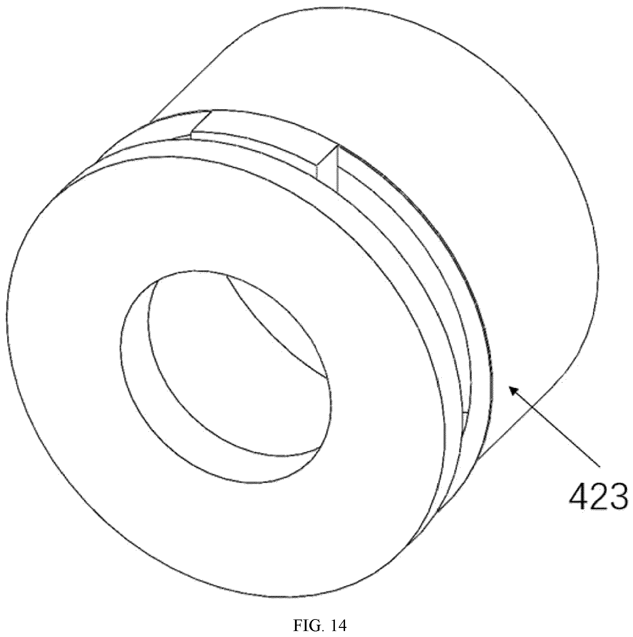

Referring to FIGs. 1 to 14, a three-stage pilot inverse proportional pressure-reducing solenoid valve includes a yoke 1, a valve body assembly 2, a stop iron assembly 3, a coil assembly 4 and a clamp spring 5.

Referring to FIGs. 1 to 3, the yoke 1 is annular, one end of the yoke 1 is provided with the valve body assembly 2 and the other end is provided with the coil assembly 4, and a first cavity is formed among the valve body assembly 2, the yoke 1 and the coil assembly 4, and the step iron assembly 3 is arranged in the first cavity.

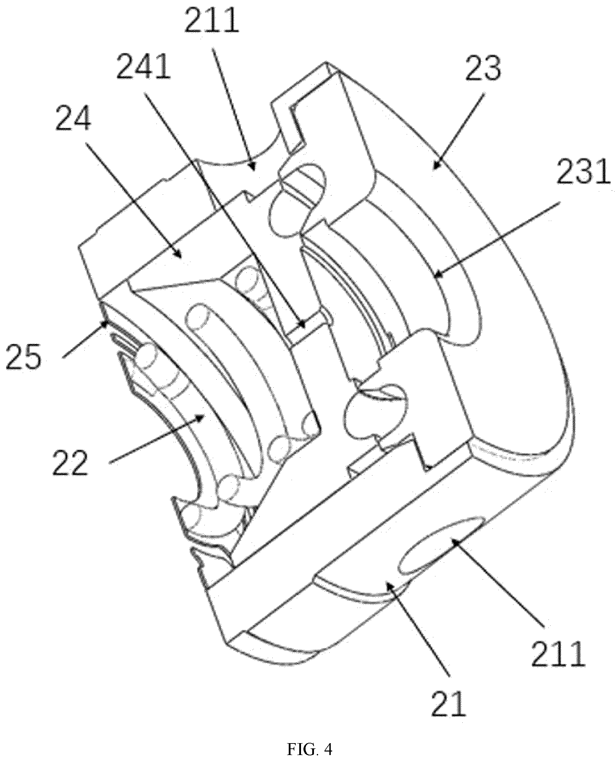

Referring to FIG. 4, the valve body assembly 2 includes an annular valve body 21, and a valve seat 23, a primary valve core 24, a main spring 22 and a leaf spring 25 which are sequentially arranged in the valve body 21 from outside to inside in the axial direction. The valve seat 23, the primary valve core 24 and the leaf spring 25 form the primary valve core assembly. The valve body 21 is radially provided with multiple first radial through holes 211 which are evenly distributed around the circumference. The valve seat 23 and the primary valve core 24 are respectively provided with a valve seat through hole 231 and a second damping hole 241 being sequentially communicated.

Preferably, the leaf spring 25 and the main spring 22 can be integrated into a whole, and the variable stiffness spring can be used to achieve the same function, thus reducing the number of parts and reducing the cost.

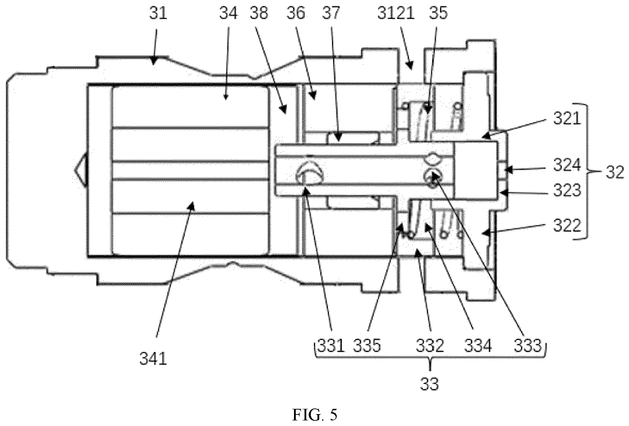

Referring to FIG. 5, the stop iron assembly 3 includes a stop iron 31, a second-stage valve core 32, a third-stage valve core 33, an armature 34, a second spring 35, a pole shoe 36, a bearing 37 and a composite coating 38.

The stop iron 31 is located in the first cavity, a flow passage gap is arranged between an outer sidewall of one end, close to the valve body 21, of the stop iron 31 and an inner wall of the first cavity, a first axial blind hole with an opening facing the valve body 21 is arranged on the stop iron 31 in an axial direction, and a second-stage valve core 32, a third-stage valve core 33 and an armature 34 are sequentially arranged in the first axial blind hole from outside to inside along an axial direction.

Referring to FIG. 5, the second-stage valve core 32 includes an annular guide cylinder 321, a first radial outer convex ring 322 arranged on an outer sidewall of the guide cylinder 321, and a radial inner convex ring 323 arranged on an inner sidewall of one end, close to the valve body assembly 2, of the guide cylinder 321, and an inner hole of the radial inner convex ring 323 forms a first damping hole 324.

The radial cross-sectional area of the first damping hole 324 is larger than the radial cross-sectional area of the second damping hole 241.

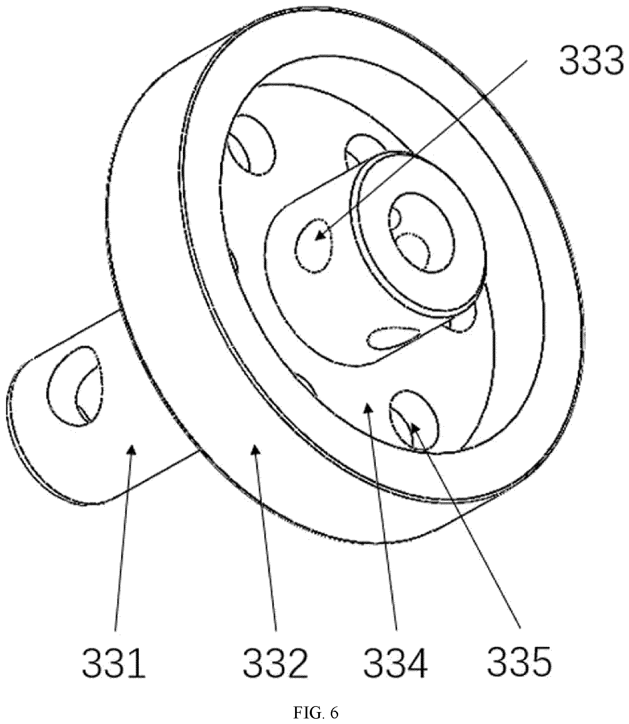

Referring to FIGs. 5 and 6, the third-stage valve core 33 includes an annular ejector rod 331, a second radial outer convex ring 332 arranged on a sidewall of one end, close to the second-stage valve core 32, of the ejector rod 331, and multiple second radial through holes 333 arranged on a sidewall of the ejector rod 331. One end of the ejector rod 331 extends into an opening at one end of the guide cylinder 321, and is limited by the radial inner convex ring 323 of the guide cylinder 321, an outer diameter of the limit ejector rod 331 is matched with an inner diameter of the guide cylinder 321 and the ejector rod is capable of relatively sliding to block multiple second radial through holes 333. The other end of the ejector rod 331 is sequentially sleeved with a bearing 37 and a pole shoe 36 from inside to outside in a radial direction, and the other end is used for abutting against the armature 34. The second radial outer convex ring 332 is arranged on the outer sidewall of the ejector rod 331. One end, close to the second-stage valve core 32, of the second radial outer convex ring 332 is provided with an axial concave ring 334, and the bottom surface of the axial concave ring 334 is axially provided with multiple first axial through holes 335 which are evenly distributed along the circumference.

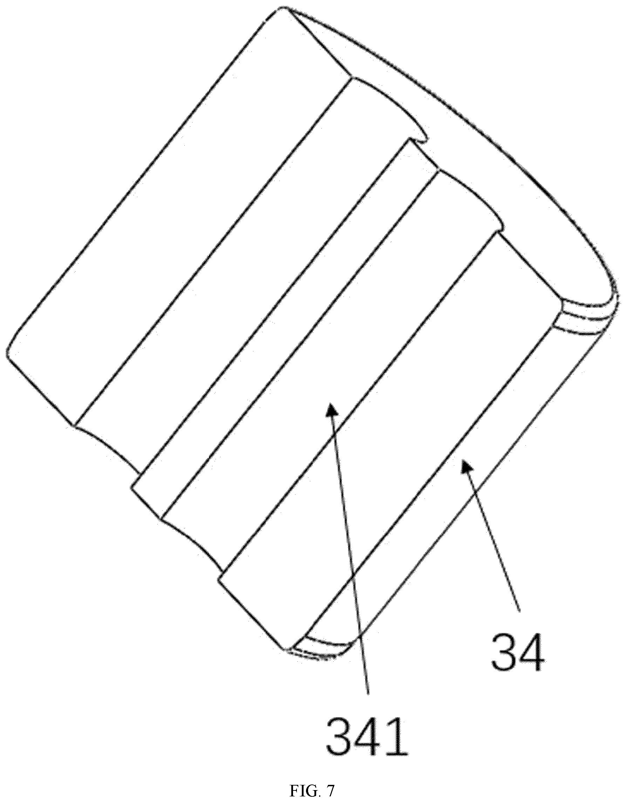

Referring to FIG. 5, the inner wall of the first axial blind hole is provided with a composite coating 38 at a position corresponding to the armature 34. Referring to FIG. 7, the armature 34 is symmetrically provided with two second axial through holes 341 in the axial direction.

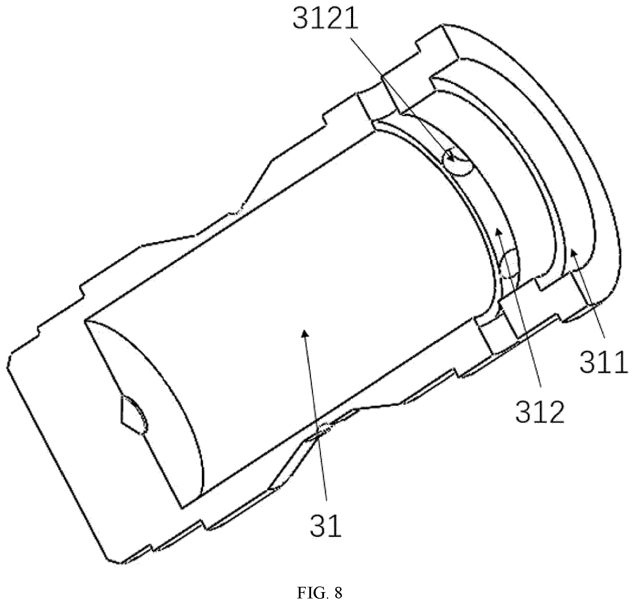

Referring to FIG. 8, the inner wall of the first axial blind hole is provided with a first annular groove 311 and a second annular groove 312 which are respectively adapted to the peripheries of the first radial outer convex ring 322 and the second radial outer convex ring 332. The first annular groove 311 is used for axially limiting the first radial outer convex ring 322. Multiple third radial through holes 3121 evenly distributed around the circumference are arranged on the sidewall of the second annular groove 312 in a radial direction, and the radial cross-sectional area of the first damping hole 324 is smaller than the sum of the radial cross-sectional areas of the third radial through holes 3121.

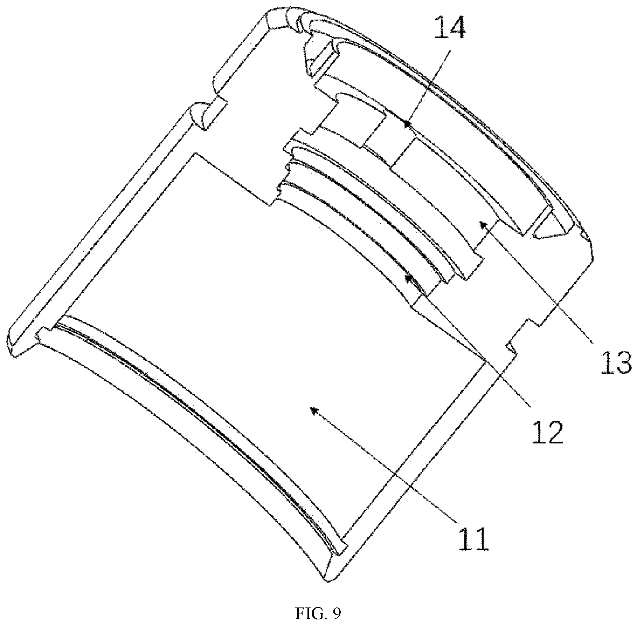

Referring to FIG. 9, the inner wall of the yoke 1 is provided with a third annular groove 11, and three annular grooves 12 and an annular boss 13 arranged in sequence along the axial direction and close to the valve body assembly 2. An annular cavity is formed between the inner sidewall of the third annular groove 11 and the outer sidewall of the stop iron 31. The diameters of the three annular grooves 12 gradually increase along the axial direction and close to the valve body assembly 2, and correspond to the position of the second annular groove 312. The inner circumference of the annular boss 13 is provided with two notches 14 evenly distributed around the circumference.

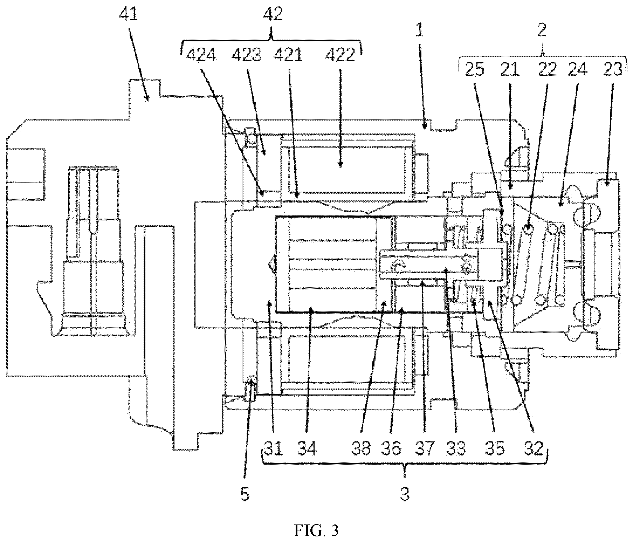

Referring to FIGs 3, 10 to 14, the coil assembly 4 includes a coil plastic package plug 41 arranged at the other end of the yoke 1, and a coil body 42 arranged in an annular cavity. The coil body 42 includes a coil skeleton 421, an enameled wire 422, a coil coil plastic package 423 and a magnetic circuit board 424.

Referring to FIGs. 3, 5, 8, 15 and 16, an inner wall of the valve body 21, the primary valve core 24 and the second-stage valve core 32 forms a first pilot cavity 10, and the main spring 22 is located in the first pilot cavity 10. A cavity between an inner wall of the guide cylinder 321 and an inner wall of the ejector rod 331, and among the armature 34, an outer wall of the ejector rod 331, the pole shoe 36, the bearing 37 and an inner wall of the first axial blind hole forms a second pilot cavity 20. The second-stage valve core 32, the third-stage valve core 33 and an inner wall of the first axial blind hole form an annular third pilot cavity 30, and the second spring 35 is located in the third pilot cavity 30. The first pilot cavity 10 sequentially communicates with the outside through the second damping hole 241 and the valve seat through hole 231. The first pilot cavity 10 communicates with the second pilot cavity 20 through the first damping hole 324, and the second pilot cavity 20 communicates with the third pilot cavity 30 through the second radial through holes 333; the third pilot cavity 30 sequentially communicates with the outside through multiple first axial through holes 335, the second annular groove 312, multiple third radial through holes 3121 and the flow passage gap, or sequentially through a gap between the second radial outer convex ring 332 and an inner wall of the first axial blind hole, the second annular groove 312 and multiple third radial through holes 3121, and the flow passage gap.

Referring to FIGs. 3 and 9, the clamp spring 5 is arranged between the coil plastic package 423 and an inner wall of the third annular groove 11.

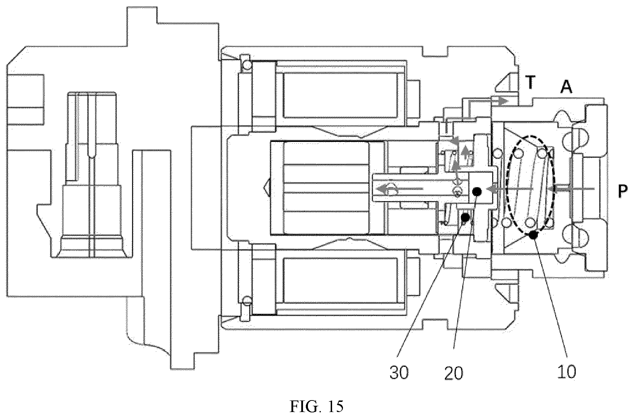

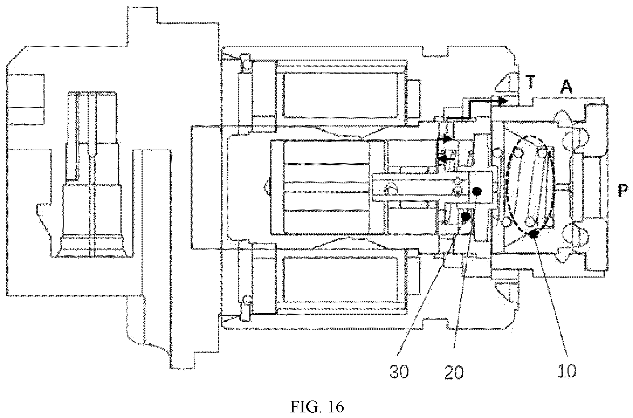

The working principle of the disclosure is as follows.
1. When the solenoid valve is not powered on:
   the primary valve core 24 is acted by the oil pressure of P port, the elastic force of the main spring 22 and the elastic force of the leaf spring 25; when the pressure at the P port is low, the main spring 22 is slightly compressed, and the elastic force of the leaf spring 25 plays the main role, pressing the end face of the primary valve core 24 against the valve seat 23, and there is no gap between the primary valve core 24 and the valve seat 23, so that the liquid cannot directly flow from the P port to the A port; because the radial cross-sectional area of the first damping hole 324 is larger than that of the second damping hole 241, the pressure of the second pilot cavity 20 is smaller than that of the first pilot cavity 10; since the radial cross-sectional area of the first damping hole 324 is smaller than the sum of the radial cross-sectional areas of multiple third radial through holes 3121, the pressure in the third pilot cavity 30 is smaller than that in the second pilot cavity 20; at this time, the liquid flows into the first pilot cavity 10 from the outside sequentially through the valve seat through hole 231 (P port) and the second damping hole 241, then into the second pilot cavity 20 through the first damping hole 324, then into the third pilot cavity 30 through multiple second radial through holes 333, and finally flows out from the gap between the second radial outer convex ring 332 and the inner wall of the first axial blind hole, the second annular groove 312, multiple third radial through holes 3121, three annular grooves 12 and two notches 14 (T-holes) (arrows in FIG. 15);
   when the pressure at the P port continues to increase, the pressure at the P port is greater than the combined force of the elastic force of the leaf spring 25 and the main spring 22, and the primary valve core 24 is separated from the valve seat 23 by the hydraulic pressure, so that a flow passage is formed between the primary valve core 24 and the valve seat 23, and the liquid directly flows from the P port to the A port.
2. When the solenoid valve is powered on:
   the armature 34 is acted on the three-stage valve core 33 by electromagnetic force, and the three-stage valve core 33 is acted on by the pressure of the third pilot cavity 30 and the pressure of the second pilot cavity 20; when the electromagnetic force is greater than the combined force of the pressure in the third pilot cavity 30 and the pressure in the second pilot cavity 20, the third-stage valve core 33 moves towards the first-stage valve core 24, and the liquid flows to the second annular groove 312 on the stop iron 31 through the inner hole of the ejector rod 331 and the second radial through hole 333, so that the flow passage area increases rapidly, and the pressure in the third pilot cavity 30 decreases rapidly, and then the pressure in the second pilot cavity 20 and the pressure in the first pilot cavity 10 decrease rapidly; the first-stage valve core 24 is quickly opened to a larger opening by the P port pressure, and the A port pressure rises rapidly;
   when the current passing through the solenoid valve continues to increase and the electromagnetic force continues to increase, the third-stage valve core 33 moves towards the second-stage valve core 32, and the flow passage formed by the second radial through hole 333 of the third-stage valve core 33 and the inner hole of the guide cylinder 321 continues to shrink, resulting in that the pressure in the second pilot cavity 20 increases, and then the pressure in the first pilot cavity 10 increases, so that the third-stage valve core 33 moves toward the valve seat 23 under the action of the pressure in the first pilot cavity 10, the spring force of the main spring 22 and the leaf spring 25, and the pressure at the P port, and the opening between the primary valve core 24 and the valve seat 23 decreases, and the pressure at the A port continues to decrease;
   when the electromagnetic force continues to increase, the third-stage valve core 33 moves toward the first-stage valve core 24 until the guide cylinder 321 blocks multiple second radial through holes 333, and the flow passage formed by multiple second radial through holes 333 of the third-stage valve core 33 and the inner hole of the guide cylinder 321 is closed, so that the pressure in the second pilot cavity 20 reaches the highest; and then the primary valve core 24 is pressed against the valve seat 23 under the pressure of the first pilot cavity 10, the spring force and the P port pressure, and the A port pressure reaches the lowest; at this time, referring to the arrow in FIG. 16, the first axial through hole 335, the second annular groove 312, multiple third radial through holes 3121, the three annular grooves 12 and the two notches 14 (T ports) are communicated in sequence, and the liquid flows out from the third pilot cavity 30 to the outside.

## Claims

1. A three-stage pilot inverse proportional pressure-reducing solenoid valve, comprising a yoke (1) and a stop iron assembly (3):
wherein the yoke (1) is annular, two ends of the yoke (1) are respectively provided with a valve body assembly (2) and a coil assembly (4), and a first cavity is formed among the valve body assembly (2), the yoke (1) and the coil assembly (4); the valve body assembly (2) comprises an annular valve body (21), a primary valve core assembly and a main spring (22), wherein the valve body (21) is radially provided with a plurality of first radial through holes (211) being evenly distributed on a circumference;
the stop iron assembly (3) comprises a stop iron (31) and a second spring (35); the stop iron (31) is located in the first cavity, a flow passage gap is arranged between an outer sidewall of one end, close to the valve body (21), of the stop iron (31) and an inner wall of the first cavity, a first axial blind hole with an opening facing the valve body (21) is arranged on the stop iron (31) in an axial direction, and a second-stage valve core (32), a third-stage valve core (33) and an armature (34) are sequentially arranged in the first axial blind hole from outside to inside along an axial direction;
the second-stage valve core (32) comprises an annular guide cylinder (321), a first radial outer convex ring (322) arranged on an outer sidewall of the guide cylinder (321), and a radial inner convex ring (323) arranged on an inner sidewall of one end, close to the valve body assembly (2), of the guide cylinder (321), and an inner hole of the radial inner convex ring (323) forms a first damping hole (324); the third-stage valve core (33) comprises an annular ejector rod (331), a second radial outer convex ring (332) arranged on an outer sidewall of the ejector rod (331), and a plurality of second radial through holes (333) arranged on a sidewall of one end, close to the second-stage valve core (32), of the ejector rod (331), and one end of the ejector rod (331) extends into the guide cylinder (321) and is limited by the radial inner convex ring (323) of the guide cylinder (321), an outer diameter of the ejector rod (331) is matched with an inner diameter of the guide cylinder (321) and the ejector rod (331) is capable of relatively sliding to block the plurality of second radial through holes (333), and an other end of the ejector rod (331) is sequentially sleeved with a bearing (37) and a pole shoe (36) from inside to outside in a radial direction, and the other end is used for abutting against the armature (34); a plurality of first axial through holes (335) being evenly distributed on a circumference are arranged on the second radial outer convex ring (332) along an axial direction; an inner wall of the first axial blind hole is provided with a first annular groove (311) and a second annular groove (312) being respectively adapted to peripheries of the first radial outer convex ring (322) and the second radial outer convex ring (332); a sidewall of the second annular groove (312) is provided with a plurality of third radial through holes (3121) being evenly distributed on a circumference along a radial direction;
an inner wall of the valve body (21), the primary valve core assembly and the second-stage valve core (32) forms a first pilot cavity (10), and the main spring (22) is located in the first pilot cavity (10); voids defined between an inner wall of the guide cylinder (321) and an inner wall of the ejector rod (331), and between the armature (34), an outer wall of the ejector rod (331), the pole shoe (36), the bearing (37) and an inner wall of the first axial blind hole together forms a second pilot cavity (20); the second-stage valve core (32), the third-stage valve core (33) and an inner wall of the first axial blind hole form an annular third pilot cavity (30), and the second spring (35) is located in the third pilot cavity (30); the first pilot cavity (10) communicates with an outside through a flow passage on the primary valve core assembly, the first pilot cavity (10) communicates with the second pilot cavity (20) through the first damping hole (324), and the second pilot cavity (20) communicates with the third pilot cavity (30) through the second radial through holes (333); the third pilot cavity (30) sequentially communicates with the outside through the plurality of first axial through holes (335), the second annular groove (312), the plurality of third radial through holes (3121) and the flow passage gap, or sequentially through a gap between the second radial outer convex ring (332) and an inner wall of the first axial blind hole, the second annular groove (312) and the plurality of third radial through holes (3121), and the flow passage gap; a minimum value of flow passage radial cross-sectional area of the primary valve core assembly is smaller than radial cross-sectional area of the first damping hole (324), and the radial cross-sectional area of the first damping hole (324) is smaller than sum of radial cross-sectional areas of the plurality of third radial through holes (3121).

2. The three-stage pilot inverse proportional pressure-reducing solenoid valve according to claim 1, wherein:
the primary valve core assembly comprises a valve seat (23), a primary valve core (24) and a leaf spring (25) being sequentially arranged in the valve body (21) from outside to inside along an axial direction; the main spring (22) is arranged between the leaf spring (25) and the primary valve core (24); the valve seat (23) and the primary valve core (24) are respectively provided with a valve seat through hole (231) and a second damping hole (241) being sequentially communicated; radial cross-sectional area of the valve seat through hole (231) is larger than radial cross-sectional area of the second damping hole (241), and the radial cross-sectional area of the second damping hole (241) is smaller than the radial cross-sectional area of the first damping hole (324); the first pilot cavity (10) is sequentially communicated with the outside through the second damping hole (241) and the valve seat through hole (231).

3. The three-stage pilot inverse proportional pressure-reducing solenoid valve according to claim 2, wherein
the leaf spring (25) and the main spring (22) are integrated.

4. The three-stage pilot inverse proportional pressure-reducing solenoid valve according to claim 1, wherein
one end, close to the second-stage valve core (32), of the second radial outer convex ring (332) is provided with an axial concave ring (334), and the plurality of first axial through holes (335) are arranged on a bottom surface of the axial concave ring (334).

5. The three-stage pilot inverse proportional pressure-reducing solenoid valve according to claim 1, wherein
one end of an inner wall, close to the valve body assembly (2), of the yoke (1) is sequentially provided with at least one of annular grooves (12) and an annular boss (13) along an axial direction; a position of one of the annular grooves (12) corresponds to a position of the second annular groove (312), an inner periphery of the annular boss (13) is provide with at least one of notches (14), and all the annular grooves (12) and all the notches (14) form the flow passage gap.

6. The three-stage pilot inverse proportional pressure-reducing solenoid valve according to claim 5, wherein
a plurality of annular grooves (12) are provided, and diameters of the plurality of annular grooves (12) gradually increase along an axial direction and close to the valve body assembly (2).

7. The three-stage pilot inverse proportional pressure-reducing solenoid valve according to claim 1-6, wherein
the solenoid valve further comprises a clamp spring (5), the coil assembly (4) comprises a coil plastic package plug arranged at an other end of the yoke (1) and a coil body (42) arranged between an inner sidewall of the yoke (1) and an outer sidewall of the stop iron (31); the clamp spring (5) is arranged between the coil body (42) and the inner sidewall of the yoke (1).

8. The three-stage pilot inverse proportional pressure-reducing solenoid valve according to claim 7, wherein
an inner wall of the yoke (1) is provided with a third annular groove (11), and an annular cavity is formed between an inner sidewall of the third annular groove (11) and the outer sidewall of the stop iron (31); the coil body (42) is arranged in the annular cavity, and the coil body (42) comprises a coil skeleton (421), an enameled wire (422), a coil plastic package (423) and a magnetic circuit board (424); the clamp spring (5) is arranged between the coil plastic package (423) and an inner wall of the third annular groove (11).

9. The three-stage pilot inverse proportional pressure-reducing solenoid valve according to claim 8, wherein
a composite coating (38) is arranged on the inner wall of the first axial blind hole at a position corresponding to the armature (34).

10. The three-stage pilot inverse proportional pressure-reducing solenoid valve according to claim 9, wherein
the armature (34) is axially provided with at least one second axial through hole (341), or a gap is arranged between the armature (34) and the inner wall of the first axial blind hole.

## Patentansprüche

1. Dreistufig vorgesteuertes inversproportionales Druckmindermagnetventil, umfassend ein Magnetjoch (1) und eine Festkernanordnung (3), **dadurch gekennzeichnet, dass**:
das Magnetjoch (1) ringförmig ausgebildet ist, wobei an den beiden Enden des Magnetjochs (1) jeweils eine Ventilkörperanordnung (2) beziehungsweise eine Spulenanordnung (4) vorgesehen ist und zwischen der Ventilkörperanordnung (2), dem Magnetjoch (1) und der Spulenanordnung (4) ein erster Hohlraum ausgebildet ist; wobei die Ventilkörperanordnung (2) einen ringförmigen Ventilkörper (21), eine Primärventilschieberanordnung und eine Hauptfeder (22) umfasst, wobei der Ventilkörper (21) radial mit mehreren ersten radialen Durchgangsbohrungen (211) versehen ist, die gleichmäßig über einen Umfang verteilt sind;
die Festkernanordnung (3) einen Festkern (31) und eine zweite Feder (35) umfasst; wobei der Festkern (31) in dem ersten Hohlraum angeordnet ist, wobei zwischen einer äußeren Umfangswand eines dem Ventilkörper (21) zugewandten Endes des Festkerns (31) und einer Innenwand des ersten Hohlraums ein Fluiddurchtrittsspalt vorgesehen ist; wobei in dem Festkern (31) in axialer Richtung eine erste axiale Sackbohrung vorgesehen ist, deren Öffnung dem Ventilkörper (21) zugewandt ist, und wobei in der ersten axialen Sackbohrung von außen nach innen in axialer Richtung nacheinander ein Ventilschieber zweiter Stufe (32), ein Ventilschieber dritter Stufe (33) und ein Anker (34) angeordnet sind;
der Ventilschieber zweiter Stufe (32) einen ringförmigen Führungszylinder (321), einen ersten radial nach außen vorstehenden Ringvorsprung (322), der an einer äußeren Umfangswand des Führungszylinders (321) angeordnet ist, und einen radial nach innen vorstehenden Ringvorsprung (323) umfasst, der an einer inneren Umfangswand eines der Ventilkörperanordnung (2) zugewandten Endes des Führungszylinders (321) angeordnet ist, wobei eine Innenöffnung des radial nach innen vorstehenden Ringvorsprungs (323) eine erste Dämpfungsbohrung (324) bildet; wobei der Ventilschieber dritter Stufe (33) einen ringförmigen Stößel (331), einen zweiten radial nach außen vorstehenden Ringvorsprung (332), der an einer äußeren Umfangswand des Stößels (331) angeordnet ist, und mehrere zweite radiale Durchgangsbohrungen (333) umfasst, die an einer Seitenwand eines dem Ventilschieber zweiter Stufe (32) zugewandten Endes des Stößels (331) angeordnet sind; wobei sich ein Ende des Stößels (331) in den Führungszylinder (321) hinein erstreckt und durch den radial nach innen vorstehenden Ringvorsprung (323) des Führungszylinders (321) begrenzt ist, wobei ein Außendurchmesser des Stößels (331) an einen Innendurchmesser des Führungszylinders (321) angepasst ist und der Stößel (331) relativ verschiebbar ist, um die mehreren zweiten radialen Durchgangsbohrungen (333) zu verschließen, und wobei auf das andere Ende des Stößels (331) in radialer Richtung von innen nach außen nacheinander ein Lager (37) und ein Polschuh (36) aufgesetzt sind und das andere Ende zur Anlage an dem Anker (34) vorgesehen ist; wobei mehrere erste axiale Durchgangsbohrungen (335), die gleichmäßig über einen Umfang verteilt sind, in dem zweiten radial nach außen vorstehenden Ringvorsprung (332) in axialer Richtung vorgesehen sind; wobei eine Innenwand der ersten axialen Sackbohrung mit einer ersten Ringnut (311) und einer zweiten Ringnut (312) versehen ist, die jeweils an Außenumfänge des ersten radial nach außen vorstehenden Ringvorsprungs (322) und des zweiten radial nach außen vorstehenden Ringvorsprungs (332) angepasst sind; wobei eine Seitenwand der zweiten Ringnut (312) mit mehreren dritten radialen Durchgangsbohrungen (3121) versehen ist, die in radialer Richtung gleichmäßig über einen Umfang verteilt sind;
eine Innenwand des Ventilkörpers (21), die Primärventilschieberanordnung und der Ventilschieber zweiter Stufe (32) eine erste Vorsteuerkammer (10) bilden, wobei die Hauptfeder (22) in der ersten Vorsteuerkammer (10) angeordnet ist; wobei die durch eine Innenwand des Führungszylinders (321) und eine Innenwand des Stößels (331) begrenzten Hohlräume sowie die durch den Anker (34), eine Außenwand des Stößels (331), den Polschuh (36), das Lager (37) und eine Innenwand der ersten axialen Sackbohrung begrenzten Hohlräume gemeinsam eine zweite Vorsteuerkammer (20) bilden; wobei der Ventilschieber zweiter Stufe (32), der Ventilschieber dritter Stufe (33) und eine Innenwand der ersten axialen Sackbohrung eine ringförmige dritte Vorsteuerkammer (30) bilden, und wobei die zweite Feder (35) in der dritten Vorsteuerkammer (30) angeordnet ist; wobei die erste Vorsteuerkammer (10) über einen an der Primärventilschieberanordnung ausgebildeten Fluiddurchtritt mit der Außenseite in Verbindung steht, wobei die erste Vorsteuerkammer (10) über die erste Dämpfungsbohrung (324) mit der zweiten Vorsteuerkammer (20) in Verbindung steht und wobei die zweite Vorsteuerkammer (20) über die zweiten radialen Durchgangsbohrungen (333) mit der dritten Vorsteuerkammer (30) in Verbindung steht; wobei die dritte Vorsteuerkammer (30) nacheinander über die mehreren ersten axialen Durchgangsbohrungen (335), die zweite Ringnut (312), die mehreren dritten radialen Durchgangsbohrungen (3121) und den Fluiddurchtrittsspalt mit der Außenseite in Verbindung steht, oder nacheinander über einen Spalt zwischen dem zweiten radial nach außen vorstehenden Ringvorsprung (332) und einer Innenwand der ersten axialen Sackbohrung, die zweite Ringnut (312), die mehreren dritten radialen Durchgangsbohrungen (3121) und den Fluiddurchtrittsspalt mit der Außenseite in Verbindung steht; wobei die minimale radiale Strömungsquerschnittsfläche der Primärventilschieberanordnung kleiner ist als die radiale Querschnittsfläche der ersten Dämpfungsbohrung (324), und wobei die radiale Querschnittsfläche der ersten Dämpfungsbohrung (324) kleiner ist als die Summe der radialen Querschnittsflächen der mehreren dritten radialen Durchgangsbohrungen (3121).

2. Dreistufig vorgesteuertes inversproportionales Druckmindermagnetventil nach Anspruch 1, **dadurch gekennzeichnet, dass**:
die Primärventilschieberanordnung einen Ventilsitz (23), einen Primärventilschieber (24) und eine Blattfeder (25) umfasst, die in dem Ventilkörper (21) von außen nach innen in axialer Richtung nacheinander angeordnet sind; wobei die Hauptfeder (22) zwischen der Blattfeder (25) und dem Primärventilschieber (24) angeordnet ist; wobei der Ventilsitz (23) und der Primärventilschieber (24) jeweils mit einer Ventilsitz-Durchgangsbohrung (231) und einer zweiten Dämpfungsbohrung (241) versehen sind, die nacheinander miteinander in Fluidverbindung stehen; wobei eine radiale Querschnittsfläche der Ventilsitz-Durchgangsbohrung (231) größer ist als eine radiale Querschnittsfläche der zweiten Dämpfungsbohrung (241), und wobei die radiale Querschnittsfläche der zweiten Dämpfungsbohrung (241) kleiner ist als die radiale Querschnittsfläche der ersten Dämpfungsbohrung (324); wobei die erste Vorsteuerkammer (10) nacheinander über die zweite Dämpfungsbohrung (241) und die Ventilsitz-Durchgangsbohrung (231) mit der Außenseite in Verbindung steht.

3. Dreistufig vorgesteuertes inversproportionales Druckmindermagnetventil nach Anspruch 2, **dadurch gekennzeichnet, dass**
die Blattfeder (25) und die Hauptfeder (22) einstückig ausgebildet sind.

4. Dreistufig vorgesteuertes inversproportionales Druckmindermagnetventil nach Anspruch 1, **dadurch gekennzeichnet, dass**
ein dem Ventilschieber zweiter Stufe (32) zugewandtes Ende des zweiten radial nach außen vorstehenden Ringvorsprungs (332) mit einer axialen Ringnut (334) versehen ist, und dass die mehreren ersten axialen Durchgangsbohrungen (335) an einer Bodenfläche der axialen Ringnut (334) angeordnet sind.

5. Dreistufig vorgesteuertes inversproportionales Druckmindermagnetventil nach Anspruch 1, **dadurch gekennzeichnet, dass**
an einem der Ventilkörperanordnung (2) zugewandten Ende einer Innenwand des Magnetjochs (1) in axialer Richtung nacheinander mindestens eine Ringnut (12) und ein Ringbund (13) vorgesehen sind; wobei eine Position einer der Ringnuten (12) einer Position der zweiten Ringnut (312) entspricht, wobei ein Innenumfang des Ringbunds (13) mit mindestens einer Aussparung (14) versehen ist, und wobei sämtliche Ringnuten (12) und sämtliche Aussparungen (14) den Fluiddurchtrittsspalt bilden.

6. Dreistufig vorgesteuertes inversproportionales Druckmindermagnetventil nach Anspruch 5, **dadurch gekennzeichnet, dass**
mehrere Ringnuten (12) vorgesehen sind und dass die Durchmesser der mehreren Ringnuten (12) in axialer Richtung zur Ventilkörperanordnung (2) hin allmählich zunehmen.

7. Dreistufig vorgesteuertes inversproportionales Druckmindermagnetventil nach einem der Ansprüche 1 bis 6, **dadurch gekennzeichnet, dass**
das Magnetventil ferner einen Sicherungsring (5) umfasst, wobei die Spulenanordnung (4) einen kunststoffumspritzten Spulenstecker, der an einem anderen Ende des Magnetjochs (1) angeordnet ist, und eine Spulenbaugruppe (42) umfasst, die zwischen einer inneren Umfangswand des Magnetjochs (1) und einer äußeren Umfangswand des Festkerns (31) angeordnet ist; wobei der Sicherungsring (5) zwischen der Spulenbaugruppe (42) und der inneren Umfangswand des Magnetjochs (1) angeordnet ist.

8. Dreistufig vorgesteuertes inversproportionales Druckmindermagnetventil nach Anspruch 7, **dadurch gekennzeichnet, dass**
eine Innenwand des Magnetjochs (1) mit einer dritten Ringnut (11) versehen ist und zwischen einer inneren Umfangswand der dritten Ringnut (11) und der äußeren Umfangswand des Festkerns (31) ein Ringhohlraum ausgebildet ist; wobei die Spulenbaugruppe (42) in dem Ringhohlraum angeordnet ist und die Spulenbaugruppe (42) einen Spulenträger (421), einen Lackdraht (422), eine Kunststoffumspritzung der Spule (423) und eine Magnetkreisplatte (424) umfasst; wobei der Sicherungsring (5) zwischen der Kunststoffumspritzung der Spule (423) und einer Innenwand der dritten Ringnut (11) angeordnet ist.

9. Dreistufig vorgesteuertes inversproportionales Druckmindermagnetventil nach Anspruch 8, **dadurch gekennzeichnet, dass**
an der Innenwand der ersten axialen Sackbohrung an einer dem Anker (34) entsprechenden Position eine Verbundbeschichtung (38) angeordnet ist.

10. Dreistufig vorgesteuertes inversproportionales Druckmindermagnetventil nach Anspruch 9, **dadurch gekennzeichnet, dass**
der Anker (34) axial mit mindestens einer zweiten axialen Durchgangsbohrung (341) versehen ist oder dass zwischen dem Anker (34) und der Innenwand der ersten axialen Sackbohrung ein Spalt vorgesehen ist.

## Revendications

1. Électrovanne de réduction de pression inversement proportionnelle à pilotage à trois étages, comprenant une culasse magnétique (1) et un ensemble de noyau fixe (3), **caractérisée en ce que** :
la culasse magnétique (1) est annulaire, deux extrémités de la culasse magnétique (1) étant respectivement pourvues d'un ensemble de corps de vanne (2) et d'un ensemble de bobine (4), et une première cavité étant formée entre l'ensemble de corps de vanne (2), la culasse magnétique (1) et l'ensemble de bobine (4) ; l'ensemble de corps de vanne (2) comprend un corps de vanne annulaire (21), un ensemble de tiroir primaire et un ressort principal (22), le corps de vanne (21) étant pourvu radialement d'une pluralité de premiers trous traversants radiaux (211) répartis uniformément sur une circonférence ;
l'ensemble de noyau fixe (3) comprend un noyau fixe (31) et un deuxième ressort (35) ; le noyau fixe (31) est situé dans la première cavité, un jeu de passage de fluide étant ménagé entre une paroi latérale externe d'une extrémité du noyau fixe (31), proche du corps de vanne (21), et une paroi intérieure de la première cavité ; un premier alésage borgne axial, dont l'ouverture est orientée vers le corps de vanne (21), est ménagé dans le noyau fixe (31) suivant une direction axiale, et un tiroir de deuxième étage (32), un tiroir de troisième étage (33) et une armature mobile (34) sont disposés successivement dans le premier alésage borgne axial, de l'extérieur vers l'intérieur suivant une direction axiale ;
le tiroir de deuxième étage (32) comprend un cylindre de guidage annulaire (321), une première saillie annulaire radiale externe (322) disposée sur une paroi latérale externe du cylindre de guidage (321), et une saillie annulaire radiale interne (323) disposée sur une paroi latérale interne d'une extrémité du cylindre de guidage (321) proche de l'ensemble de corps de vanne (2), un trou intérieur de la saillie annulaire radiale interne (323) formant un premier orifice d'amortissement (324) ; le tiroir de troisième étage (33) comprend un poussoir annulaire (331), une deuxième saillie annulaire radiale externe (332) disposée sur une paroi latérale externe du poussoir (331), et une pluralité de deuxièmes trous traversants radiaux (333) disposés sur une paroi latérale d'une extrémité du poussoir (331) proche du tiroir de deuxième étage (32), une extrémité du poussoir (331) s'étendant dans le cylindre de guidage (321) et étant limitée par la saillie annulaire radiale interne (323) du cylindre de guidage (321), un diamètre extérieur du poussoir (331) correspondant à un diamètre intérieur du cylindre de guidage (321), et le poussoir (331) étant apte à coulisser relativement afin d'obturer la pluralité de deuxièmes trous traversants radiaux (333), une autre extrémité du poussoir (331) étant successivement entourée, de l'intérieur vers l'extérieur suivant une direction radiale, d'un palier (37) et d'une pièce polaire (36), ladite autre extrémité étant destinée à venir en butée contre l'armature mobile (34) ; une pluralité de premiers trous traversants axiaux (335), répartis uniformément sur une circonférence, sont ménagés dans la deuxième saillie annulaire radiale externe (332) suivant une direction axiale ; une paroi intérieure du premier alésage borgne axial est pourvue d'une première gorge annulaire (311) et d'une deuxième gorge annulaire (312) respectivement adaptées aux périphéries de la première saillie annulaire radiale externe (322) et de la deuxième saillie annulaire radiale externe (332) ; une paroi latérale de la deuxième gorge annulaire (312) est pourvue d'une pluralité de troisièmes trous traversants radiaux (3121) répartis uniformément sur une circonférence suivant une direction radiale ;
une paroi intérieure du corps de vanne (21), l'ensemble de tiroir primaire et le tiroir de deuxième étage (32) forment une première chambre de pilotage (10), et le ressort principal (22) est situé dans la première chambre de pilotage (10) ; des cavités délimitées par une paroi intérieure du cylindre de guidage (321) et une paroi intérieure du poussoir (331), ainsi que par l'armature mobile (34), une paroi extérieure du poussoir (331), la pièce polaire (36), le palier (37) et une paroi intérieure du premier alésage borgne axial, forment ensemble une deuxième chambre de pilotage (20) ; le tiroir de deuxième étage (32), le tiroir de troisième étage (33) et une paroi intérieure du premier alésage borgne axial forment une troisième chambre de pilotage annulaire (30), et le deuxième ressort (35) est situé dans la troisième chambre de pilotage (30) ; la première chambre de pilotage (10) communique avec l'extérieur par l'intermédiaire d'un passage de fluide ménagé sur l'ensemble de tiroir primaire, la première chambre de pilotage (10) communique avec la deuxième chambre de pilotage (20) par l'intermédiaire du premier orifice d'amortissement (324), et la deuxième chambre de pilotage (20) communique avec la troisième chambre de pilotage (30) par l'intermédiaire des deuxièmes trous traversants radiaux (333) ; la troisième chambre de pilotage (30) communique successivement avec l'extérieur par l'intermédiaire de la pluralité de premiers trous traversants axiaux (335), de la deuxième gorge annulaire (312), de la pluralité de troisièmes trous traversants radiaux (3121) et du jeu de passage de fluide, ou successivement par l'intermédiaire d'un jeu entre la deuxième saillie annulaire radiale externe (332) et une paroi intérieure du premier alésage borgne axial, de la deuxième gorge annulaire (312), de la pluralité de troisièmes trous traversants radiaux (3121) et du jeu de passage de fluide ; une valeur minimale de l'aire de section radiale de passage de fluide de l'ensemble de tiroir primaire est inférieure à l'aire de section radiale du premier orifice d'amortissement (324), et l'aire de section radiale du premier orifice d'amortissement (324) est inférieure à la somme des aires de section radiale de la pluralité de troisièmes trous traversants radiaux (3121).

2. Électrovanne de réduction de pression inversement proportionnelle à pilotage à trois étages selon la revendication 1, dans laquelle :
l'ensemble de tiroir primaire comprend un siège de vanne (23), un tiroir primaire (24) et un ressort à lame (25) disposés successivement dans le corps de vanne (21), de l'extérieur vers l'intérieur suivant une direction axiale ; le ressort principal (22) est disposé entre le ressort à lame (25) et le tiroir primaire (24) ; le siège de vanne (23) et le tiroir primaire (24) sont respectivement pourvus d'un trou traversant de siège de vanne (231) et d'un deuxième orifice d'amortissement (241) communiquant successivement ; l'aire de section radiale du trou traversant de siège de vanne (231) est supérieure à l'aire de section radiale du deuxième orifice d'amortissement (241), et l'aire de section radiale du deuxième orifice d'amortissement (241) est inférieure à l'aire de section radiale du premier orifice d'amortissement (324) ; la première chambre de pilotage (10) communique successivement avec l'extérieur par l'intermédiaire du deuxième orifice d'amortissement (241) et du trou traversant de siège de vanne (231).

3. Électrovanne de réduction de pression inversement proportionnelle à pilotage à trois étages selon la revendication 2, dans laquelle
le ressort à lame (25) et le ressort principal (22) sont formés d'un seul tenant.

4. Électrovanne de réduction de pression inversement proportionnelle à pilotage à trois étages selon la revendication 1, dans laquelle
une extrémité de la deuxième saillie annulaire radiale externe (332), proche du tiroir de deuxième étage (32), est pourvue d'une gorge annulaire axiale (334), et la pluralité de premiers trous traversants axiaux (335) sont disposés sur une surface de fond de la gorge annulaire axiale (334).

5. Électrovanne de réduction de pression inversement proportionnelle à pilotage à trois étages selon la revendication 1, dans laquelle
une extrémité d'une paroi intérieure de la culasse magnétique (1), proche de l'ensemble de corps de vanne (2), est pourvue successivement, suivant une direction axiale, d'au moins une gorge annulaire (12) et d'un bossage annulaire (13) ; une position de l'une des gorges annulaires (12) correspond à une position de la deuxième gorge annulaire (312), une périphérie intérieure du bossage annulaire (13) est pourvue d'au moins une encoche (14), et l'ensemble des gorges annulaires (12) ainsi que l'ensemble des encoches (14) forment le jeu de passage de fluide.

6. Électrovanne de réduction de pression inversement proportionnelle à pilotage à trois étages selon la revendication 5, dans laquelle
une pluralité de gorges annulaires (12) sont prévues, et les diamètres de la pluralité de gorges annulaires (12) augmentent progressivement suivant une direction axiale en se rapprochant de l'ensemble de corps de vanne (2).

7. Électrovanne de réduction de pression inversement proportionnelle à pilotage à trois étages selon l'une quelconque des revendications 1 à 6, dans laquelle
l'électrovanne comprend en outre un anneau élastique de retenue (5), l'ensemble de bobine (4) comprend un connecteur de bobine surmoulé en plastique disposé à une autre extrémité de la culasse magnétique (1), ainsi qu'un corps de bobine (42) disposé entre une paroi latérale intérieure de la culasse magnétique (1) et une paroi latérale extérieure du noyau fixe (31) ; l'anneau élastique de retenue (5) est disposé entre le corps de bobine (42) et la paroi latérale intérieure de la culasse magnétique (1).

8. Électrovanne de réduction de pression inversement proportionnelle à pilotage à trois étages selon la revendication 7, dans laquelle
une paroi intérieure de la culasse magnétique (1) est pourvue d'une troisième gorge annulaire (11), et une cavité annulaire est formée entre une paroi latérale intérieure de la troisième gorge annulaire (11) et la paroi latérale extérieure du noyau fixe (31) ; le corps de bobine (42) est disposé dans la cavité annulaire, et le corps de bobine (42) comprend un support de bobine (421), un fil émaillé (422), un surmoulage plastique de bobine (423) et une plaque de circuit magnétique (424) ; l'anneau élastique de retenue (5) est disposé entre le surmoulage plastique de bobine (423) et une paroi intérieure de la troisième gorge annulaire (11).

9. Électrovanne de réduction de pression inversement proportionnelle à pilotage à trois étages selon la revendication 8, dans laquelle
un revêtement composite (38) est disposé sur la paroi intérieure du premier alésage borgne axial, à une position correspondant à l'armature mobile (34).

10. Électrovanne de réduction de pression inversement proportionnelle à pilotage à trois étages selon la revendication 9, dans laquelle
l'armature mobile (34) est pourvue axialement d'au moins un deuxième trou traversant axial (341), ou un jeu est ménagé entre l'armature mobile (34) et la paroi intérieure du premier alésage borgne axial.
